# EUROPEAN PATENT SPECIFICATION

(11) **EP 2 320 720 B1**
(45) Date of publication and mention of the grant of the patent: **02.01.2019**
(21) Application number: 09806895.0
(22) Date of filing: 11.08.2009
(51) Int. Cl.: A01K 73/045

(54) **PELAGIC TRAWL DOOR FOR REMOTE ADJUSTMENT UNDER WATER OF THE ACTIVE SURFACE AREA OF THE TRAWL DOOR**
PELAGISCHES SCHERBRETT MIT UNTERWASSER-FERNEINSTELLUNG DES AKTIVEN OBERFLÄCHENBEREICHS DES SCHERBRETTS
PANNEAUX DE CHALUT PÉLAGIQUE PERMETTANT UN RÉGLAGE À DISTANCE ET SOUS L'EAU DE LA SURFACE ACTIVE DESDITS PANNEAUX DE CHALUT

(30) Priority: 11.08.2008 NO 20083482
(43) Date of publication of application: 18.05.2011
(73) Proprietor: Egersund Trål As, 4370 Egersund (NO)
(72) Inventor: NEDREBØ, Trond Egil, 5561 Bokn (NO)
(74) Representative: Håmsø Patentbyrå AS
(86) International application number: PCT/NO2009/000283
(87) International publication number: WO 2010/019049

(56) References cited:
- EP-A1- 1 696 723
- WO-A1-86/02525
- WO-A1-86/02525
- US-A- 4 574 723
- US-A1- 2008 029 012

## Description

### Area of invention

The present invention is associated with pelagic trawl doors in general. By means of this invention it is possible to carry out a far better and considerably simpler control of the horizontal and/or vertical position of the trawl in water during a trawling operation. By so doing, it is also easy to adapt and optimise the trawling operation with respect to the type of trawling of interest, and without having to pull up the trawl doors to surface for adjustment thereof. Optimum adjustment and placement of the trawl in the water also provides a significant reduction in the water resistance. Among other things, this results in savings in the fuel consumption of the trawling operation and thus in improved economics of the trawling.

### Background of the invention

The purpose of trawl doors is to steer the trawl, i.e. the trawl bag, under water and keep it distended during fishing. Trawl doors are attached to a host boat by means of wires and chains, and wires also extend from the trawl doors onwards to the very trawl.

In order to allow the position and/or spreading force of a trawl door to be controlled in the water, it is customary to adjust this through various fastening of wires and chains on the trawl door. In order to allow such an adjustment of the fastening to be carried out, the trawl door must firstly be pulled up and into the host boat. This is a time-consuming, cumbersome and inefficient method of adapting the trawl to the trawling of interest. As such, there is a need in the industry for remedying this situation through simpler, more flexible and more efficient technical solutions.

### Prior art

Today there is an ongoing development of trawl doors. In particular, the development has set forth the following objects relating to trawling:
(a) to simplify the control of the trawl under water;
(b) to increase the control options of the trawl under water; and
(c) to reduce the fuel consumption of the boat.

In this context, a number of variants of trawl doors exist having dissimilar sizes, materials and shapes as well as dissimilar proportions between the length and width of the trawl door.

According to the prior art, various devices and methods exist for adjusting the position of the trawl doors in the water during trawling. These technical solutions cause various disadvantages, including limitations in the range of uses, restricted flexibility, increased technical complexity, increased acquisition costs and a more extensive and complicated maintenance. Hereinafter the closest technical solutions will be discussed in further detail.

GB 1.405.076 (which corresponds to NO 127690), WO 86/02525 and SU 1.746.970 concern trawl doors provided with horizontally movable dampers capable of covering, completely or partially, a corresponding opening in a trawl door. The trawl door according to GB 1.405.076 and WO 86/025025 are shaped as a more or less flat plate, whereas SU 1.746.970 concerns a trawl door (or paravane) having a hydrofoil shape. In order to allow the active surface area of the trawl doors to be adjusted, all of these trawl doors must be pulled up to a host vessel/-boat on surface for manual adjustment of the dampers relative to the respective opening in the trawl door. This is time-consuming, cumbersome and inefficient.

GB 2.122.562 concerns a trawl door in the form of a paravane having a hydrofoil profile structured for remote-controlled adjustment of the paravane's angle of attack during movement through water. The angle of attack, which indicates the trawl door's angular positioning the water during use, is measured both with respect to the moving direction of the paravane, and with respect to the vertical plane. The paravane is adjustably connected to a three-legged stay arrangement, the opposite side of which may be attached to a towing wire from a trawl vessel. The angle of attack of the paravane is adjusted by adjusting the stay's attachment points on the paravane. In this context, one leg in the stay arrangement may be connected to an electric motor receiving control signals and motive power via a cabled connection up to the trawl vessel. By means of the motor, the leg's attachment point on the paravane may be moved in the horizontal direction, whereby a remote-controlled change of the angle of attack may be carried out during use in water. This adjustment solution comprises no adjustment dampers and openings in the paravane. Moreover, the solution involves limited options for changing the paravane's angle of attack under water. This is because only one leg in the stay arrangement is capable of being moved under water via remote-control.

US 4.574.723 also concerns a paravane having a hydrofoil shape which, among other things, may comprise remote-controlled rudder devices for adjustment of the paravane's angle of attack during movement through water. The paravane may also comprise a propeller-driven generator for production of electric energy for miscellaneous control elements and equipment in the paravane. Neither does this adjustment solution comprise any adjustment dampers and openings in the paravane.

Of the more remote publications, EP 1.696.723 (which corresponds to NO 20063124) describes, among other things, a driving unit associated with a trawl door for dynamic adjustment of the trawl door. The driving unit may be remote-controlled, via acoustic signals, from a boat on surface, or by means of signals from miscellaneous sensors placed near the trawl when under water. The trawl door comprises no adjustment dampers and openings therein.

EP 1.594.359, which also is a more remote publication, describes a module for monitoring and optimising a trawling operation. When in position of use, the module is fixed to the trawl. The module comprises at least one measuring sensor, communication elements and a power supply unit. The module is structured to allow remote activation by means of control signals. Among other things, the power supply unit may consist of a propeller-driven generator disposed in the module. The module may also be connected to a trawl door and comprise a control motor for correct angular position of the trawl door in the water based on signals from a sensor measuring the trawl door's angular position. It is mentioned that the trawl door, by means of the control motor, may be positioned at different angles in the water, even though the publication does not describe how the control motor specifically brings this effect about. EP 1.594.359 focuses on the very module and its measuring sensor(s) and not on features of the trawl door, and there is no reference to adjustment dampers and openings in the trawl door.

As such, the prior art does not describe any trawl door provided with remote-controlled dampers capable of adjusting openings in the trawl door and thus adjust the degree of opening and/or position of the trawl in the water during trawling.

### Objects of the invention

The principal object of the invention is to avoid or reduce disadvantages associated with the prior art.

A more specific object of the invention is to provide a trawl door having an active surface area capable of being changed in a remote-controlled and flexible manner whilst the trawl door is located in its position of use under water. Thereby, great flexibility in the trawl door's ability to change its spreading force and/or position in the water during trawling is achieved.

### Description of how to achieve the objects

The objects are achieved through the features disclosed in the following description and in the subsequent claims.

The present invention according to claim 1 provides a trawl door for remote-controlled adjustment under water of the active surface area of the trawl door. The trawl door comprises an upper surface portion and a lower surface portion disposed on either side of a central axis. The terms "upper" and "lower" refer to the position of the surface portion when the trawl door is located in its position of use in the water during trawling. In this position of use, the central axis will be directed horizontally or approximately horizontally and at an acute angle relative to the host vessel's and the trawl bag's moving direction in the water. Each surface portion is provided with an opening with an associated, movable damper structured in a manner allowing it to be moved, completely or partially, over the opening for individual adjustment of the active surface area of the surface portion.

Thereby, the active surface area of each wing may be adjusted to the degree desired, and independent of each other. The degree of opening controls the flow section of the opening and thus the active surface area of the wing. When the opening is completely closed by the damper, the active surface area of the wing will be at its largest. When the damper is pushed completely away from the opening, the active surface area of the wing will be at its smallest.

The distinctive characteristic of the trawl door is that the two surface portions have a hydrodynamic shape and are comprised of an upper wing and a lower wing disposed on either side of a tube formed about a central axis of the trawl door;
- wherein the damper of each wing is structured movable along an axis extending transversely to the central axis;
- wherein each damper is movably connected to a driving device connected to the trawl door; and
- wherein the central tube is provided at least with a remote-controlled communication- and control means for individual operation of the driving device of each damper.

The fact that said axis extends transversely to the central axis implies that the transversely extending axis is non-parallel to the central axis. As such, the transversely extending axis does not have to be perpendicular to the central axis. The transversely extending axis may assume any suitable angle relative to the central axis.

Yet further, the remote-controlled communication and control means will have to comprise miscellaneous equipment for allowing communication of at least control signals between the host vessel and the driving devices of the dampers. Typically, such equipment will comprise electronic components and circuits, a receiver and transmitter for the type of control signal, connection lines, etc. of interest.

By means of such a remote-controlled trawl door, great flexibility in the trawl door's ability to change its spreading force and/or position in the water during trawling is achieved, and without having to pull the trawl door to surface for adjustment thereof.

Upon structuring the openings of the wings with equal size, the spreading force of the trawl door may be adjusted. When at least two trawl doors of the present type are used to keep a trawl bag distended during trawling, the spreading force of the trawl doors may be adjusted so as to allow the degree of opening of the trawl mouth to be adjusted.

On the other hand, upon structuring the openings of the wings with dissimilar size, the trawl may be steered up or down in the water so as to determine the depth of interest for the trawling. Structured in this manner, one wing will be exposed to a larger water pressure than that of the other wing, whereby a net torque is produced about the central axis of the trawl door. Through suitable adjustment of the dissimilar size of the openings of the wings, the trawl door may be steered up or down in the water.

Contrary to the trawl doors discussed in GB 1.405.076, WO 86/025025 and SU 1.746.970, the present trawl door has dampers structured movable along an axis extending transversely to the central axis. Said known trawl doors, however, have dampers being movable along, or parallel to, the central axis of the trawl door, the axis of which will be horizontal or approximately horizontal.

Inasmuch as the present trawl door, or paravane, represents a steering device for suitable steering of a trawl bag under water, it is also conceivable to use the trawl door/paravane to steer other types of objects under water. As such, it is also conceivable to use this trawl door/paravane for other purposes than trawling.

Each wing in the present trawl door is assembled from three successive, parallel and partially overlapping panels extending out from the central tube and transversely to the central axis of the trawl door, wherein the middle panel in each wing is provided with said opening with an associated, movable damper.

The wings may also be disposed in non-coincident planes, whereby the trawl door assumes a V-shape as viewed along the central axis of the trawl door. Normally, such a V-shape will render the trawl door more stable during movement through the water.

Further, said driving device for each damper may be comprised of an electric motor. Another suitable type of driving device may also be used, for example a hydraulics-based driving device, to move the damper relative to the accompanying wing opening.

Advantageously, each damper may be structured moveable in a stepless manner along said transversely extending axis. This allows for fine adjustment of the size of the wing opening and thus the active surface area of the wing.

For the latter purpose, each damper may for example be thread-connected to a threaded bar rotatably connected to the driving device. In principle, this describes a rack and pinion arrangement. Another suitable type of displacement connection between the driving device and the damper may be used, for example a hydraulically driven piston connection or similar.

Yet further, said remote-controlled communication and control means may be structured for wireless communication with the host vessel of the trawl door, for example via hydroacoustic signals. For example radio frequency signals may also be used for this purpose.

For operation and running of at least the communication and control means and the driving devices for the dampers, the central tube of the trawl door may also be provided with at least one battery, for example a rechargeable battery.

In one embodiment, the rechargeable battery may be in connection with a generator connected to a propeller disposed on the trawl door and structured in a manner allowing it to be driven by a water flow during movement of the trawl door under water.

Moreover, at least the communication and control means and the driving devices may be disposed in the central tube.

Furthermore, at least the communication- and control means and the driving devices may be disposed in a compact and watertight unit structured for releasable placement in the central tube. Such a releasable unit may easily be disconnected from the trawl door for replacement, service and/or repair of equipment therein. Should equipment in the watertight unit require connection to external elements, for example connection lines, shafts or similar, associated openings in the unit must also be of a watertight construction.

In order to allow automatic adjustment of the trawl door to be carried out under water, the trawl door may also be provided with at least one sensor for measuring trawl-related parameters as input data to the communication- and control means. Said sensor(s) may, for example, comprise a distance sensor and/or an echo sounder.

For automatic adjustment of the active surface area of the trawl door via movable dampers and openings in the hydrodynamic wings of the trawl door, sensors and related control systems of other types, for example of the types described in EP 1.696.723 and in EP 1.594.359 (cf. prior art above), may also be used. Attention is called to the fact that none of these publications relate such sensors and control systems to automatic adjustment of the active surface area of a trawl door.

Hereinafter, a non-limiting exemplary embodiment of the present trawl door will be shown.

### Short description of the figures of the exemplary embodiment

- Figure 1: shows a front elevation of a trawl door according to the invention, wherein the figure shows, among other things, two hydrodynamic wings disposed about a central tub, and wherein the figure also shows a section line III-III through a upper wing;
- Figure 2: shows, among other things, a section through the central tube in the trawl door according to figure 1, whereby figure 2 shows miscellaneous equipment disposed in the central tube; and
- Figure 3: shows a cross-section through the upper wing as viewed along section line III-III shown in figure 1.

The figures are somewhat simplified and show only the most essential components and elements of the present trawl door. The shape, relative dimensions and mutual positions of the components and elements may also be somewhat distorted.

### Description of the exemplary embodiment

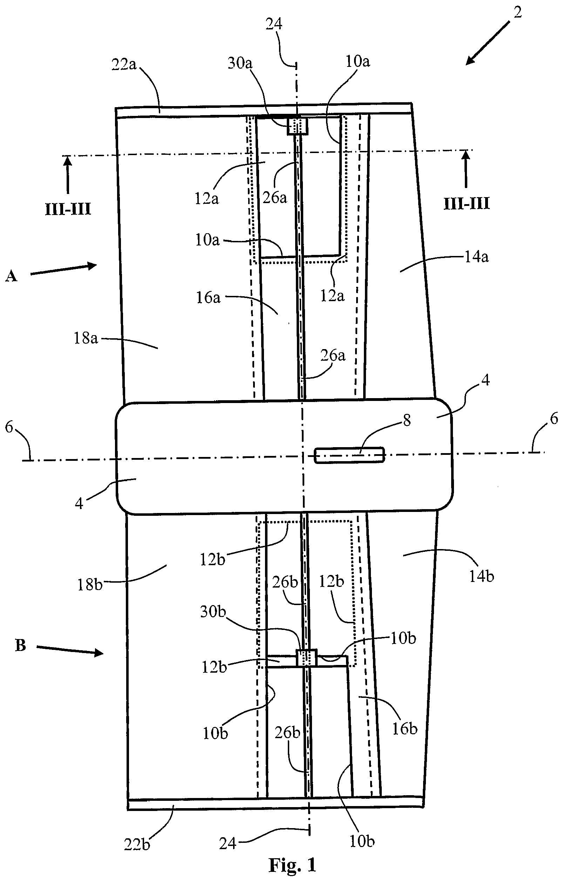

Figures 1-3 show a hydrodynamic trawl door 2 according to the invention. The trawl door 2 is structured for remote-controlled adjustment under water of the active surface area of the trawl door 2. Thereby, great flexibility in the trawl door's ability to change its spreading force and/or position in the water during trawling is achieved.

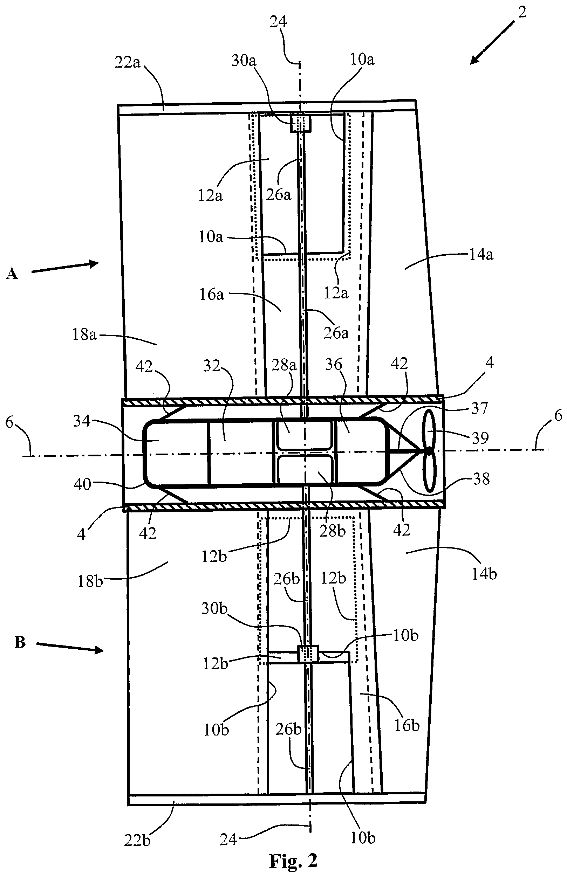

When the trawl door 2 is located in its position of use during trawling, the trawl door 2 will normally be obliquely oriented in the water, much the same as shown in figures 1 and 2. In these figures, the moving direction of the trawl door 2 will be towards the right.

The trawl door 2 comprises an upper wing A and a lower wing B disposed on either side of a central tube 4 formed about a central axis 6 of the trawl door 2. The tube 4 is also provided with a towing point in the form of an attachment lug 8 or similar fastening device fixed, in a balanced manner, along the central axis 6. Figure 1 shows each wing A and B provided with a respective, through opening 10a and 10b with an associated, movable damper 12a and 12b. Each damper 12a, 12b is structured in a manner allowing it to be moved, completely or partially, over the respective opening 10a, 10b for individual adjustment of the active surface area of the wing A, B.

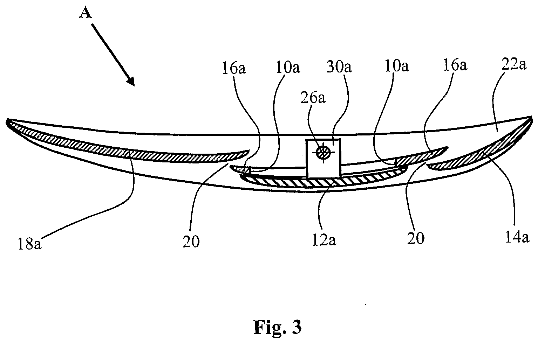

In this exemplary embodiment, each hydrodynamic wing A, B is assembled from three respective, successive and partially overlapping panels, comprising a front panel 14a, 14b, a middle panel 16a, 16b, and a back panel 18a, 18b. Collectively the three panels 14a, 16a, 18a and 14b, 16b, 18b of each respective wing A, B are arcuate in shape, as shown in figure 3. This figure also shows that small flow apertures 20 exist between the middle panel 16a, 16b and the adjacent panels 14a, 14b and 18a, 18b. All panels 14a, 14b, 16a, 16b, 18a, 18b protrude from the central tube 4 and extend transversely to the central axis 6 of the trawl door 2. The panels 14a, 16a, 18a and 14b, 16b, 18b are fixed to the respective side profiles 22a, 22b disposed at the free end of each wing A, B. Each wing A, B may also be provided with suitable bracing elements in order to reinforce the trawl door 2 during use. In order to clearly illustrate the most essential features of the trawl door 2, such bracing elements are not shown in the figures.

Further, each damper 12a, 12b is structured movable along an axis 24 extending transversely to the central axis 6. In this embodiment, the transversely extending axis 24 runs through a respective threaded bar 26a, 26b rotatably supported at the outer end of the wing A, B. Each threaded bar 26a, 26b, at the opposite end thereof, is rotatably connected to a respective driving device in the form of an electric motor 28a, 28b disposed in the central tube 4. If required or desired, such an electric motor 28a, 28b may also comprise a gear box (not shown). Moreover, each threaded bar 26a, 26b is carried through a threaded hole in a respective connector 30a, 30b attached to an outer portion of the damper 12a, 12b. In this manner, each damper 12a, 12b is thread-connected to the respective threaded bar 26a, 26b and may be moved in a stepless manner along the threaded bar 26a, 26b, and thus along the transversely extending axis 24, when the electric motor 28a, 28b rotates the threaded bar 26a, 26b in the desired direction. Each damper 12a, 12b may thus be moved individually, and to the degree desired, over the respective opening 10a, 10b in the middle panel 14a, 14b, thereby carrying out individual adjustment of the active surface area of each wing A, B.

The latter adjustment option is illustrated in figures 1 and 2, where the damper 12a on the upper wing A is displaced completely over the opening 10a so as to close it completely, whereas the damper 12b on the lower wing A is displaced completely away from the opening 10b so as to open it completely to through flow. By so doing, the wing A is structured with a maximum active surface area, whereas the wing B is structured with a minimum active surface area. Through suitable adjustment of the positions of the dampers 12a, 12b relative to their respective openings 10a, 10b in the wings A, B, great flexibility is achieved with respect to being able to adjust the position of the trawl door 2 horizontally and/or vertically in the water.

In this exemplary embodiment, the trawl door 2 is structured for remote-controlled adjustment via wireless communication with a trawl vessel (not shown) on surface. For this purpose, the central tube 4 is provided with, among other things, a remote-controlled communication and control means for individual operation of the electric motor 28a, 28b of each damper 12a, 12b. In this embodiment, the communication and control means is structured for wireless communication with the trawl vessel via hydroacoustic signals. For this reason, the tube 4 also comprises an electronic unit 32 with miscellaneous equipment for this purpose. Typically, such equipment will comprise electronic components and circuits, signal processing equipment, connection lines, a receiver and possibly a transceiver for hydroacoustic signals, etc. Such equipment constitutes prior art and will therefore not be discussed in further detail here.

The central tube 4 is also provided with a rechargeable battery 34 for operation and running of the electronic unit 32 as well as the electric motors 28a, 28b for the dampers 12a, 12b. The rechargeable battery 34 is in connection with a generator 36 which, via a shaft 37 through a support rack 38, is connected to a propeller 39 at the front end of the tube 4. The propeller 39 is structured in a manner allowing it to be driven by a water flow through the tube 4 when the trawl door 2 is being moved under water, whereby the battery 34 is being charged during the trawling operation. In this embodiment, the generator 36, the electric motors 28a, 28b, the electronic unit 32, and the rechargeable battery 34 are disposed in a compact and watertight unit 40 structured for releasable placement in the central tube 4. Figure 2 shows such a watertight unit 40 in section and placed releasably in the tube 4. In this context, shock absorbers 42 are disposed between the watertight unit 40 and the tube 4 in order to protect the unit 40 against strikes and impacts during hauling, setting and operation of the trawl door 2. Furthermore, the threaded bars 26a, 26b and the propeller shaft 37 are carried into the watertight unit 40 via openings (not shown) of a watertight design. Such a releasable unit 40 may easily be disconnected from the trawl door 2 for replacement, service and/or repair of equipment in the unit 40.

## Claims

1. A pelagic trawl door (2) for remote-controlled adjustment under water of the active surface area of the pelagic trawl door (2), wherein:
- the pelagic trawl door (2) comprises an upper surface portion and a lower surface portion disposed on either side of a central axis (6) of the pelagic trawl door (2);
- said upper surface portion comprises three successive, parallel and partially overlapping panels (14a, 16a, 18a) which are fixed to a side profile (22a) at their free ends;
- said lower surface portion comprises three successive, parallel and partially overlapping panels (14b, 16b, 18b) which are fixed to a side profile (22b) at their free ends, and
- the two surface portions have a hydrodynamic shape,
**characterized in that**:
- the two surface portions are disposed on either side of a tube (4) formed about the central axis (6) of the trawl door (2), said panels (14a, 14b, 16a, 16b, 18a, 18b) extending out from the central tube (4) and transversely to the central axis (6) of the pelagic trawl door (2);
- each surface portion is provided with an opening (10a, 10b) adjacent the free end of a middle panel (16a, 16b) with an associated, movable damper (12a, 12b) being structured in a manner allowing it to be moved, completely or partially, over the opening (10a, 10b) for individual adjustment of the active surface area of the surface portion;
- wherein the damper (12a, 12b) of each middle panel (16a, 16b) is structured movable along an axis (24) extending transversely to the central axis (6);
- wherein each damper (12a, 12b) is movably connected to a driving device (28a, 28b) connected to the pelagic trawl door (2); and
- wherein the central tube (4) is provided at least with a remote-controlled communication and control means (32) for individual operation of the driving device (28a, 28b) of each damper (12a, 12b).

2. The pelagic trawl door (2) according to claim 1, **characterized in that** the upper surface portion and the lower surface portion are disposed in non-coincident planes, whereby the pelagic trawl door (2) assumes a V-shape as viewed along the central axis (6) of the pelagic trawl door (2).

3. The pelagic trawl door (2) according to claim 1 or 2, **characterized in that** said driving device (28a, 28b) is comprised of an electric motor.

4. The pelagic trawl door (2) according to any one of claims 1-3, **characterized in that** each damper (12a, 12b) is structured moveable in a stepless manner along said transversely extending axis (24).

5. The pelagic trawl door (2) according to claim 4, **characterized in that** each damper (12a, 12b) is thread-connected to a threaded bar (26a, 26b) rotatably connected to the driving device (28a, 28b).

6. The pelagic trawl door (2) according to any one of claims 1-5, **characterized in that** the remote-controlled communication and control means (32) is structured for wireless communication with a host vessel of the pelagic trawl door (2).

7. The pelagic trawl door (2) according to claim 6, **characterized in that** the communication- and control means (32) is structured for wireless communication via hydroacoustic signals.

8. The pelagic trawl door (2) according to any one of claims 1-7, **characterized in that** the central tube (4) is provided with at least one battery (34) for operation and running of at least the communication and control means (32) and the driving devices (28a, 28b) for the dampers (12a, 12b).

9. The pelagic trawl door (2) according to claim 8, **characterized in that** the at least one battery (34) is comprised of a rechargeable battery.

10. The pelagic trawl door (2) according to claim 9, **characterized in that** the rechargeable battery (34) is in connection with a generator (36) connected to a propeller (39) disposed on the pelagic trawl door (2) and structured in a manner allowing it to be driven by a water flow during movement of the pelagic trawl door (2) under water.

11. The pelagic trawl door (2) according to any one of claims 1-10, **characterized in that** at least the communication and control means (32) and the driving devices (28a, 28b) are disposed in the central tube (4).

12. The pelagic trawl door (2) according to claim 11, **characterized in that** at least the communication and control means (32) and the driving devices (28a, 28b) are disposed in a compact and watertight unit (40) structured for releasable placement in the central tube (4).

13. The pelagic trawl door (2) according to any one of claims 1-12, **characterized in that** the pelagic trawl door (2) is provided with at least one sensor for measuring trawl-related parameters as input data to the communication and control means (32) for automatic adjustment of the pelagic trawl door (2) under water.

14. The pelagic trawl door (2) according to claim 13, **characterized in that** said at least one sensor comprises at least one of a distance sensor and an echo sounder.

## Patentansprüche

1. Pelagisches Scherbrett (2) zur ferngesteuerten Einstellung unter Wasser des aktiven Oberflächenbereichs des pelagischen Scherbretts (2), wobei:
- das pelagische Scherbrett (2) einen oberen Oberflächenabschnitt und einen unteren Oberflächenabschnitt aufweist, die auf beiden Seiten einer Mittelachse (6) des pelagischen Scherbretts (2) angeordnet sind;
- wobei der besagte obere Oberflächenabschnitt drei aufeinanderfolgende, parallele und teilweise überlappende Paneele (14a, 16a, 18a) aufweist, welche an ihren freien Enden an einem Seitenprofil (22a) befestigt sind:
- wobei der besagte untere Oberflächenabschnitt drei aufeinanderfolgende, parallele und teilweise überlappende Paneele (14b, 16b, 18b) aufweist, welche an ihren freien Enden an einem Seitenprofil (22b) befestigt sind, und
- wobei die zwei Oberflächenabschnitte eine hydrodynamische Form haben,
**dadurch gekennzeichnet, dass**:
- die beiden Oberflächenabschnitte auf beiden Seiten eines Rohres (4), welches um die Mittelachse (6) des Scherbretts (2) herum gebildet ist, angeordnet sind, wobei sich die besagten Paneele (14a, 14b, 16a, 16b, 18a, 18b) von dem Zentralrohr (4) und quer zur Mittelachse (6) des pelagischen Scherbretts (2) erstrecken;
- wobei jeder Oberflächenabschnitt mit einer Öffnung (10a, 10b) benachbart zum freien Ende von einem mittleren Paneel (16a, 16b) mit einem zugehörigen, beweglichen Dämpfer (12a, 12b), der so strukturiert ist, dass er vollständig oder teilweise über die Öffnung (10a, 10b) zur individuellen Einstellung des aktiven Oberflächenbereichs des Oberflächenabschnitts bewegbar ist, versehen ist;
- wobei der Dämpfer (12a, 12b) von jedem mittleren Paneel (16a, 16b) entlang einer sich quer zur Mittelachse (6) erstreckenden Achse (24) beweglich strukturiert ist;
- wobei jeder Dämpfer (12a, 12b) beweglich mit einer mit dem pelagischen Scherbrett (2) verbundenen Antriebsvorrichtung (28a, 28b) verbunden ist; und
- wobei das Zentralrohr (4) mindestens mit einer ferngesteuerten Kommunikations- und Steuereinrichtung (32) für den individuellen Betrieb der Antriebsvorrichtung (28a, 28b) von jedem Dämpfer (12a, 12b) versehen ist.

2. Pelagisches Scherbrett (2) nach Anspruch 1, **dadurch gekennzeichnet, dass** der obere Oberflächenabschnitt und der untere Oberflächenabschnitt in nicht zusammenfallenden Ebenen angeordnet sind, wodurch das pelagische Scherbrett (2) entlang der Mittelachse (6) des pelagischen Scherbretts (2) gesehen eine V-Form annimmt.

3. Pelagisches Scherbrett (2) nach Anspruch 1 oder 2, **dadurch gekennzeichnet, dass** die besagte Antriebsvorrichtung (28a, 28b) aus einem Elektromotor besteht.

4. Pelagisches Scherbrett (2) nach einem der Ansprüche 1-3, **dadurch gekennzeichnet, dass** jeder Dämpfer (12a, 12b) so strukturiert ist, dass er entlang der besagten sich quer erstreckenden Achse (24) stufenlos beweglich ist.

5. Pelagisches Scherbrett (2) nach Anspruch 4, **dadurch gekennzeichnet, dass** jeder Dämpfer (12a, 12b) mit einer Gewindestange (26a, 26b) verschraubt ist, die drehbar mit der Antriebsvorrichtung (28a, 28b) verbunden ist.

6. Pelagisches Scherbrett (2) nach einem der Ansprüche 1-5, **dadurch gekennzeichnet, dass** die ferngesteuerte Kommunikations- und Steuereinrichtung (32) zur drahtlosen Kommunikation mit einem Gastschiff des pelagischen Scherbretts (2) strukturiert ist.

7. Pelagisches Scherbrett (2) nach Anspruch 6, **dadurch gekennzeichnet, dass** die Kommunikations- und Steuereinrichtung (32) zur drahtlosen Kommunikation über hydroakustische Signale strukturiert ist.

8. Pelagisches Scherbrett (2) nach einem der Ansprüche 1-7, **dadurch gekennzeichnet, dass** das Zentralrohr (4) mit mindestens einer Batterie (34) zum Bedienen und Betreiben von mindestens der Kommunikations- und Steuereinrichtung (32) und der Antriebsvorrichtungen (28a, 28b) der Dämpfer (12a, 12b) versehen ist.

9. Pelagisches Scherbrett (2) nach Anspruch 8, **dadurch gekennzeichnet, dass** die mindestens eine Batterie (34) aus einer wiederaufladbaren Batterie besteht.

10. Pelagisches Scherbrett (2) nach Anspruch 9, **dadurch gekennzeichnet, dass** die wiederaufladbare Batterie (34) mit einem Generator (36) in Verbindung ist, welcher mit einem auf dem pelagischen Scherbrett (2) angeordneten Propeller (39) verbunden ist, der so strukturiert ist, dass er durch einen Wasserfluss während der Bewegung des pelagischen Scherbretts (2) unter Wasser angetrieben wird.

11. Pelagisches Scherbrett (2) nach einem der Ansprüche 1-10, **dadurch gekennzeichnet, dass** mindestens die Kommunikations- und Steuereinrichtung (32) und die Antriebsvorrichtungen (28a, 28b) im Zentralrohr (4) angeordnet sind.

12. Pelagisches Scherbrett (2) nach Anspruch 11, **dadurch gekennzeichnet, dass** mindestens die Kommunikations- und Steuereinrichtung (32) und die Antriebsvorrichtungen (28a, 28b) in einer kompakten und wasserdichten Einheit (40) angeordnet sind, die zur lösbaren Platzierung im Zentralrohr (4) strukturiert ist.

13. Pelagisches Scherbrett (2) nach einem der Ansprüche 1-12, **dadurch gekennzeichnet, dass** das pelagische Scherbrett (2) mit mindestens einem Sensor zum Messen von Scherbrett-bezogenen Parametern als Eingabedaten für die Kommunikations- und Steuereinrichtung (32) zur automatischen Einstellung des pelagischen Scherbretts (2) unter Wasser versehen ist.

14. Pelagisches Scherbrett (2) nach Anspruch 13, **dadurch gekennzeichnet, dass** der besagte mindestens eine Sensor einen Distanzsensor und/oder ein Echolot umfasst.

## Revendications

1. Un panneau de chalut (2) pélagique pour un réglage à distance sous l'eau de la surface active du dit panneau de chalut (2) pélagique, dans lequel :
- le panneau de chalut (2) pélagique comprend une partie superficielle supérieure et une partie superficielle inférieure disposées de chaque côté d'un axe central (6) du panneau de chalut (2) pélagique ;
- la dite partie superficielle supérieure comporte trois plaques successives, parallèles et se recouvrant partiellement (14a, 16a, 18a) qui sont fixées à un profilé latéral (22a) au niveau de leur extrémités libres ;
- la dite partie superficielle inférieure comporte trois plaques successives, parallèles et se recouvrant partiellement (14b, 16b, 18b) qui sont fixées à un profilé latéral (22b) au niveau de leur extrémités libres, et ;
- les deux parties superficielles ont une forme hydrodynamique,
**caractérisé en ce que**
- les deux parties superficielles sont disposées de part et d'autre d'un tube (4) formé en entourant l'axe central (6) du panneau de chalut (2), les dites plaques (14a, 16a, 18a, 14b, 16b, 18b) s'étendant hors du tube (4) central et transversalement par rapport à l'axe central (6) du panneau de chalut (2) pélagique ;
- chaque partie superficielle est pourvue d'une ouverture (10a, 10b) adjacente à l'extrémité libre d'une plaque centrale (16a, 16b) avec un volet de fermeture associé et mobile (12a, 12b) étant structuré de façon à lui permettre d'être déplacé, de manière à recouvrir complètement ou partiellement l'ouverture (10a, 10b) pour un réglage individuel de la surface active de la partie superficielle ;
- dans lequel le volet (12a, 12b) de chaque plaque centrale (16a, 16b) est structuré de manière déplaçable le long d'un axe (24) s'étendant transversalement par rapport à l'axe central (6) ;
- dans lequel chaque volet (12a, 12b) est relié de manière déplaçable à un dispositif d'entrainement (28a, 28b) relié au panneau de chalut (2) pélagique ; et
- dans lequel le tube central (4) est au moins muni d'un moyen de commande et de communication à distance (32) pour l'opération individuelle du dispositif d'entraînement (28a, 28b) de chaque volet (12a, 12b).

2. Le panneau de chalut (2) pélagique selon la revendication 1, **caractérisé en ce que** la partie superficielle supérieure et la partie superficielle inférieure sont disposées dans des plans non-coïncidents, selon quoi le panneau de chalut (2) pélagique réalise une forme de V, vu le long de l'axe centrale(6) du panneau de chalut (2) pélagique.

3. Le panneau de chalut (2) pélagique selon la revendication 1 ou 2, **caractérisé en ce que** ledit dispositif d'entrainement (28a, 28b) comprend un moteur électrique.

4. Le panneau de chalut (2) pélagique selon l'une quelconque des revendications 1 à 3, **caractérisé en ce que** chaque volet (12a, 12b) est structuré de manière déplaçable et continue le long du dit axe s'étendant transversalement (24).

5. Le panneau de chalut (2) pélagique selon la revendication 4, **caractérisé en ce que** chaque volet (12a, 12b) est relié par filetage à un arbre fileté (26a, 26b) relié de manière rotative au dispositif d'entrainement (28a, 28b).

6. Le panneau de chalut (2) pélagique selon une quelconque des revendications 1 à 5, **caractérisé en ce que** le moyen de commande et de communication à distance (32) est structuré pour une communication sans fil avec le vaisseau mère du panneau de chalut (2) pélagique.

7. Le panneau de chalut (2) pélagique selon la revendication 6, **caractérisé en ce que** le moyen de commande et de communication à distance (32) est structuré pour une communication sans fil par l'intermédiaire de signaux hydroacoustiques.

8. Le panneau de chalut (2) pélagique selon l'une quelconque des revendications 1 à 7, **caractérisé en ce que** le tube central (4) est muni d'au moins une pile (34) pour l'opération et le fonctionnement d'au moins le moyen de commande et du communication à distance (32) et les dispositifs d'entrainement (28a, 28b) pour volets (12a, 12b).

9. Le panneau de chalut (2) pélagique selon la revendication 8, **caractérisé en ce que** l'au moins une pile (34) comprend une pile rechargeable.

10. Le panneau de chalut (2) pélagique selon la revendication 9, **caractérisé en ce que** la pile rechargeable (34) est reliée à un générateur (36) relié à une hélice (39) disposée sur le panneau de chalut (2) pélagique est structurée de manière à lui permettre d'être entrainée par le flux d'eau durant le déplacement du panneau de chalut (2) pélagique sous l'eau.

11. Le panneau de chalut (2) pélagique selon l'une quelconque des revendications 1 à 10, **caractérisé en ce que** au moins le moyen de commande et de communication à distance (32) et les dispositifs d'entrainement (28a, 28b) sont disposés dans le tube central (4).

12. Le panneau de chalut (2) pélagique selon la revendication 11, **caractérisé en ce que** au moins le moyen de commande et de communication à distance (32) et les dispositifs d'entrainement (28a, 28b) sont disposés dans une unité compacte et étanche à l'eau (40) structurée pour un emplacement amovible dans le tube central (4).

13. Le panneau de chalut (2) pélagique selon l'une quelconque des revendications 1 à 12, **caractérisé en ce que** le panneau de chalut (2) pélagique est muni d'au moins un capteur pour mesurer des paramètres reliés au chalut en tant que données saisies pour le moyen de commande et de communication (32) pour un réglage automatique du panneau de chalut (2) pélagique sous l'eau.

14. Le panneau de chalut (2) pélagique selon la revendication 13, **caractérisé en ce que** le dit au moins un capteur comprend au moins un capteur de distance et un échosondeur.
